# EUROPEAN PATENT APPLICATION

(11) **EP 4 586 475 A1**
(43) Date of publication of application: **16.07.2025**
(21) Application number: 23862742.6
(22) Date of filing: 14.06.2023
(51) Int. Cl.: H02M 1/00, F16C 19/06, F16C 33/76, F16C 41/00, G05F 3/16, H02K 11/225, H02K 11/35, H02M 3/155, H02M 7/10, H02P 9/04

(54) **POWER SUPPLY DEVICE AND BEARING DEVICE**

(30) Priority: 07.09.2022 JP 2022142245
(71) Applicant: NTN Corporation, Osaka-shi Osaka 530-0005 (JP)
(72) Inventor: NAKAJIMA, Akio, Iwata-shi, Shizuoka 438-8510 (JP)
(74) Representative: Bockhorni & Brüntjen Partnerschaft Patentanwälte mbB
(86) International application number: PCT/JP2023/022052
(87) International publication number: WO 2024/053197

(57) **Abstract**

A power supply device (17) includes a first circuit (61) and a converter (53). The first circuit (61) converts an AC voltage into a first DC voltage and outputs the first DC voltage. The converter (53) outputs, to an electronic circuit (54), a second DC voltage obtained by adjusting the first DC voltage to a voltage in a first voltage range. An input voltage of the converter (53) is determined in a second voltage range. The first circuit (61) converts the AC voltage into a first DC voltage adjusted to a voltage in the second voltage range.

## Description

### TECHNICAL FIELD

The present disclosure relates to a power supply device and a bearing device.

### BACKGROUND ART

Japanese Patent Laying-Open No. 2021-127831 (PTL 1) discloses a bearing device including a bearing, a rotating member, and a generator that generates electric power according to the rotation of the rotating member. The bearing device further includes a sensor that monitors the state of the bearing and a wireless communication circuit. The wireless communication circuit wirelessly transmits an output of the sensor to an external device. The electric power generated by the generator is used to drive the sensor and the wireless circuit.

### CITATION LIST

### PATENT LITERATURE

PTL 1: Japanese Patent Laying-Open No. 2021-127831

### SUMMARY OF INVENTION

### TECHNICAL PROBLEM

In electronic circuits such as the above-described sensor and wireless circuit, the voltage range required for driving the electronic circuits is specified. In addition, the effective value of an alternating-current (AC) voltage generated by the generator fluctuates depending on the speed of rotation of a rotation axis, or the like. The above-described bearing device may fail to supply a voltage in the specified voltage range to the electronic circuit.

The present disclosure has been made to solve the above-described problem. An object of the present disclosure is to provide a power supply device and a bearing device that supply a voltage in a specified voltage range to an electronic circuit.

### SOLUTION TO PROBLEM

A power supply device of the present disclosure is mounted in a bearing device and drives an electronic circuit. The bearing device includes a rotating member and a generator that generates an AC voltage according to rotation of the rotating member. An input voltage of the electronic circuit is determined in a first voltage range. The power supply device includes a first circuit and a second circuit. The first circuit converts an AC voltage into a first direct-current (DC) voltage and outputs the first DC voltage. The second circuit outputs, to the electronic circuit, a second DC voltage obtained by adjusting the first DC voltage to a voltage in the first voltage range. An input voltage of the second circuit is determined in a second voltage range. The first circuit converts the AC voltage into the first DC voltage adjusted to a voltage in the second voltage range.

### ADVANTAGEOUS EFFECTS OF INVENTION

According to the present disclosure, a power supply device can be provided that supplies a voltage in a specified voltage range to an electronic circuit.

### BRIEF DESCRIPTION OF DRAWINGS

Fig. 1 is a perspective view of an overall bearing device of Embodiment 1.
Fig. 2 is a sectional view of a bearing.
Fig. 3 is a view for illustrating a cage.
Fig. 4 is a view of the bearing device as viewed from the sensor unit side.
Fig. 5 is a diagram for illustrating an example configuration of a power supply device.
Fig. 6 is a diagram showing an example configuration of a voltage doubler rectifier circuit.
Fig. 7 is a diagram showing an example configuration of a limiting circuit.
Fig. 8 is a diagram showing an example configuration of a converter.
Fig. 9 is a diagram showing an example configuration of a power supply device of Embodiment 2.
Fig. 10 is a diagram showing an equivalent circuit of a generator and a load.
Fig. 11 shows the relationship between a speed of rotation of a rotating member and a generated voltage.
Fig. 12 shows an example configuration of a step-down circuit.
Fig. 13 shows an example configuration of another step-down circuit.
Fig. 14 shows an example configuration of still another step-down circuit.

### DESCRIPTION OF EMBODIMENTS

Embodiments of the present disclosure will be described below in detail with reference to the drawings. In the embodiments described below, when referring to the number of items, quantity, or the like, unless otherwise specified, the scope of the present disclosure is not necessarily limited to that number of items, quantity, or the like. The same reference number is attached to the same or equivalent parts, and redundant description may not be repeated. It is planned from the beginning to use a combination of the configurations in the embodiments as appropriate. In the present embodiment, "A to B" used in expressions of voltage range or the like means any of "greater than or equal to A and less than or equal to B ", "greater than A and less than or equal to B", "greater than or equal to A and less than B", or "greater than A and less than B".

### <Embodiment 1>

### [Configuration of Bearing Device]

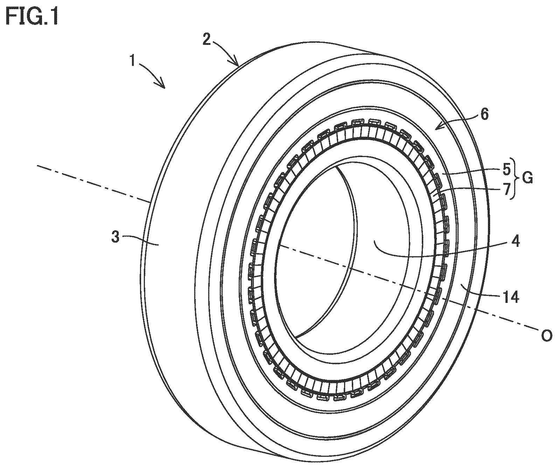

Fig. 1 is a perspective view of an overall bearing device 1 of Embodiment 1. Bearing device 1 may be mounted in any device, and for example, may be mounted in a machine tool. Bearing device 1 includes a bearing 2, a sensor unit 6, and a magnetic ring 7. Bearing 2 includes an outer ring 3 and an inner ring 4. In bearing 2, for example, outer ring 3 is a stationary ring, and inner ring 4 is a rotating ring. Bearing 2 will be described using a deep groove ball bearing as an example, but the type of bearing 2 is not limited to the deep groove ball bearing.

Herein, bearing 2 is a standard bearing with main dimensions (such as inner diameter, outer diameter, width) specified in a particular standard. The standard bearing is, for example, a bearing with dimensions specified in the ISO standard and the JIS standard. Bearing 2 is a radial bearing, and the main dimensions of bearing 2 are the dimensions specified in ISO 15 or JIS B 1512-1.

Sensor unit 6 includes a stator 5 and a lid 14. Lid 14 is a non-metallic resin member and protects the interior of sensor unit 6. Magnetic ring 7 is a magnetic member with north and south poles alternately magnetized in the circumferential direction. Stator 5 is fixed to outer ring 3, and magnetic ring 7 is fixed to inner ring 4. Stator 5 and magnetic ring 7 constitute an AC generator (hereinafter also simply referred to as "generator G"). Generator G is a claw-pole-type generator, but it may be a generator of any other structure. The dash-dot line in Fig. 1 is a rotation axis O of bearing 2.

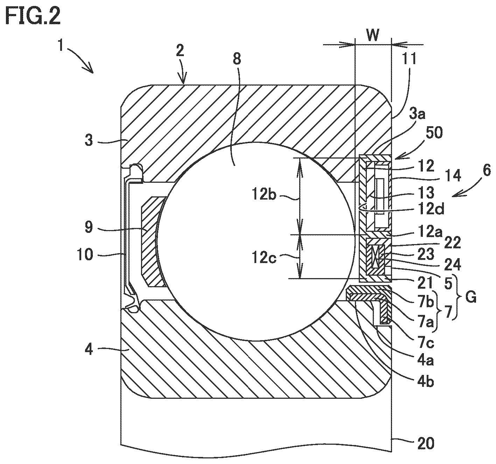

Fig. 2 is a sectional view along a plane that includes rotation axis O of bearing 2. Bearing 2 includes outer ring 3, inner ring 4, a rolling element 8, a cage 9, and a seal 10. Bearing 2 can be selected from those having the size of the model number of the standard bearing with such a distance W between an end face 11 of bearing 2 and rolling element 8 that can accommodate sensor unit 6 and magnetic ring 7. End face 11 is also an end face of outer ring 3.

A first cutout portion 3a, which is stepped, is formed in the inner circumferential surface of one end of outer ring 3 as a recess in the end of outer ring 3. A second cutout portion 4a, which is stepped, is formed in the outer circumferential surface of one end of inner ring 4 as a recess in the end of inner ring 4 so as to face first cutout portion 3a. In the axial direction of bearing 2, a ring-shaped space that is cut out toward rolling element 8 is formed by first cutout portion 3a and second cutout portion 4a so as to extend from outer ring 3 to inner ring 4.

Sensor unit 6 includes a cage member 12, a circuit board 13, stator 5, and lid 14. Cage member 12 is a magnetic material that has a partition wall 12a separating cage member 12 into a first region 12b and a second region 12c in the radial direction of bearing 2. Circuit board 13 is fixed to an inner bottom surface 12d of first region 12b, and stator 5 is arranged in second region 12c. Lid 14 protects circuit board 13 fixed to an inner bottom surface 12d. Circuit board 13 may be sealed using a resin sealing member instead of lid 14.

The outside surface of cage member 12 on the first region 12b side is fitted into and fixed to first cutout portion 3a formed in outer ring 3. Cage member 12 is press-fitted or bonded so as not to protrude from end face 11 of outer ring 3. Cage member 12 may be fixed by using press-fitting and bonding in combination or may be fixed by any other method. When cage member 12 is fixed to first cutout portion 3a, a certain gap is left between rolling element 8 and cage member 12. Consequently, even if an axial displacement occurs, the gap prevents rolling element 8 and cage member 12 from coming into contact with each other.

Stator 5 includes two magnetic members 21, 22, a bobbin 23, and a coil 24. The portion of cage member 12 which includes second region 12c is used as magnetic member 21 of stator 5.

Magnetic ring 7 includes a core 7a and a multipole magnet 7b. Multipole magnet 7b is formed by, for example, vulcanizing and bonding a magnetic material containing kneaded magnetic power and rubber, and then magnetizing the north poles and the south poles alternately in the circumferential direction of bearing 2. Core 7a of magnetic ring 7 has a flange portion 7c for increased rigidity. Magnetic ring 7 is fixed to an outside surface 4b of inner ring 4 by press-fitting or the like. Flange portion 7c fits into second cutout portion 4a formed in inner ring 4. Magnetic ring 7 is arranged so as not to protrude from an end face 20 of inner ring 4.

Magnetic ring 7, stator 5, and circuit board 13 are arranged inside an annular recess 50 so as not to overlap each other in the axial direction of bearing 2. This can allow components to be arranged inside annular recess 50, thus reducing the dimensions of bearing 2. Further, in bearing device 1, for example, magnetic ring 7 is fixed to inner ring 4, and stator 5 is fixed to outer ring 3 at an opposing position. Generator G generates AC power in accordance with the speed of rotation of the rotating member (in the present embodiment, inner ring 4). For example, a higher speed of rotation of the rotating member leads to a greater effective value of the AC power. In addition, because fluctuations of inner ring 4 and outer ring 3 in the axial direction of bearing 2 are smaller than those of cage 9, generator G can ensure a stable amount of power generation, and the bearing device can function normally with reduced dimensions.

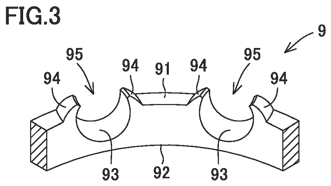

Fig. 3 is a view for illustrating cage 9. Cage 9 has recesses 93 formed at predetermined pitches along the circumferential direction of an end face 91 in the axial direction of the ring-shaped cage body. A pair of claw portions 94, 94 are formed so as to project from the opening ends that face each other in the circumferential direction of recesses 93. Recesses 93 and the pair of claw portions 94, 94 form a pocket 95 in which rolling element 8 shown in Fig. 2 is accommodated. As described above, cage 9 is shaped to be open on end face 91 on one side and to be coupled on an end face 92 on the other side. Cage 9 is a resin member, and is arranged such that sensor unit 6 and magnetic ring 7 do not protrude from end face 11 and end face 20 on the side on which cage 9 is open.

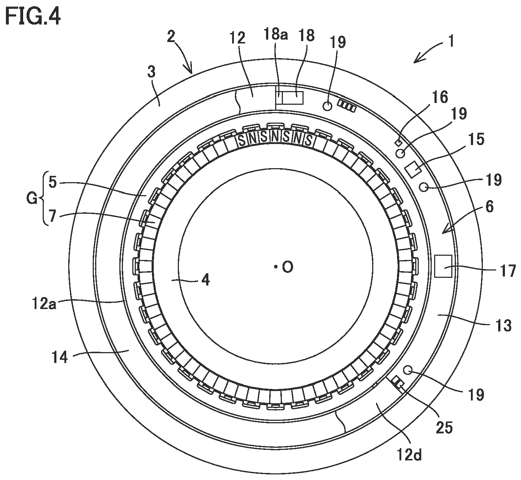

Fig. 4 is a view of bearing device 1 as viewed from the sensor unit 6 side. In Fig. 4, part of lid 14 is omitted to show the interior of sensor unit 6. Circuit board 13 has, for example, one or more sensors mounted thereon that monitor the state of bearing 2. For example, an acceleration sensor 15, a temperature sensor 16, and the like are mounted on circuit board 13. Temperature sensor 16 may be inserted through a hole (not shown) provided in inner bottom surface 12d of cage member 12 and mounted on the rear surface of circuit board 13 so as to be in close proximity to (or in contact with) the end face of first cutout portion 3a of outer ring 3. This brings temperature sensor 16 close to outer ring 3, allowing accurate measurement of the temperature of bearing 2.

In addition, a power supply device 17 and a wireless communication circuit 18 are mounted on circuit board 13.

Power supply device 17 rectifies the AC power generated by generator G and converts the AC power into DC power. An electronic circuit 54 (acceleration sensor 15, temperature sensor 16, and wireless communication circuit 18) use the DC power converted by power supply device 17. A terminal 25 is arranged on circuit board 13.

Wireless communication circuit 18 includes an antenna portion 18a. Wireless communication circuit 18 wirelessly transmits the outputs of acceleration sensor 15 and temperature sensor 16, which monitor the state of bearing 2, to the outside using antenna portion 18a. Circuit board 13 is fixed to cage member 12 with a plurality of screws 19. Circuit board 13 may also be bonded and fixed to cage member 12. Circuit board 13 with wireless communication circuit 18 mounted thereon is arranged to face lid 14 made of resin. As a result, wireless communication circuit 18 is structured so as not to be sealed with a conductive material such as metal. This allows wireless communication using antenna portion 18a in wireless communication circuit 18. As described above, in the present embodiment, power supply device 17 is mounted inside bearing device 1. Power supply device 17 may also be mounted outside bearing device 1.

### [Configuration of Power Supply Device]

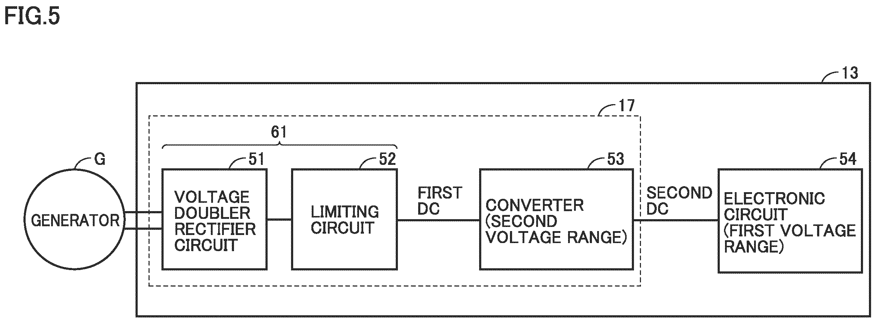

Fig. 5 is a diagram for illustrating an example configuration of power supply device 17. As described above, power supply device 17 and electronic circuit 54 are mounted on circuit board 13. In addition, acceleration sensor 15, temperature sensor 16, and wireless communication circuit 18 are mounted on electronic circuit 54. In other words, electronic circuit 54 monitors the state of bearing 2 using acceleration sensor 15 and temperature sensor 16, and transmits the detected values of these sensors to the outside using wireless communication circuit 18. In addition, the voltage range (first voltage range) required for driving electronic circuit 54 is specified. In the present embodiment, the first voltage range is greater than or equal to 3.3 V and less than or equal to 5 V.

Power supply device 17 includes a first circuit 61 and a step-up/step-down DC-DC converter. The step-up/step-down DC-DC converter is also simply referred to as "converter 53". Converter 53 corresponds to the "second circuit" of the present disclosure. A specified voltage range based on the withstand voltage is specified for the input voltage of converter 53. This voltage range corresponds to the "second voltage range" of the present disclosure. In the present embodiment, the second voltage range is greater than or equal to 15 V and less than or equal to 20 V. The second voltage range is also defined by a lower limit value and an upper limit value, and the upper limit value is also referred to as the "withstand voltage".

First circuit 61 converts the AC voltage from generator G into DC voltage and outputs the DC voltage to converter 53. First circuit 61 includes a voltage doubler rectifier circuit 51 and a limiting circuit 52.

Voltage doubler rectifier circuit 51 converts the AC voltage into a boosted DC voltage and outputs the DC voltage. The output DC voltage is supplied to limiting circuit 52. Specifically, voltage doubler rectifier circuit 51 boosts the effective value of the AC voltage by a factor of N (N is an integer greater than or equal to 2) and rectifies it, and then supplies the rectified AC voltage to limiting circuit 52. In the present embodiment, N is assumed to be 2. Voltage doubler rectifier circuit 51 may be any other circuit capable of boosting the effective value of the AC voltage.

Subsequently, limiting circuit 52 adjusts the DC voltage from voltage doubler rectifier circuit 51 to a DC voltage in the second voltage range by lowering the voltage value of the DC voltage from voltage doubler rectifier circuit 51, and outputs the DC voltage. The DC voltage in the second voltage range corresponds to the "first DC voltage" of the present disclosure.

Converter 53 adjusts the first DC voltage (the DC voltage from limiting circuit 52) to a voltage in the first voltage range. Converter 53 then outputs the adjusted DC voltage (second DC voltage) to electronic circuit 54. Electronic circuit 54 is driven by the DC voltage.

As described above, the voltage range (first voltage range) required for driving electronic circuit 54 is specified. The first voltage range is greater than or equal to 3.3 V and less than or equal to 5 V. Thus, a voltage greater than or equal to 3.3 V and less than or equal to 5 V, which is within the first voltage range, is suitable for the output voltage of converter 53.

As described above, the effective value of the AC voltage generated by generator G varies depending on the speed of rotation of the rotating member. For example, the effective value of the AC voltage may be less than or equal to 2 V when the speed of rotation of the rotating member is slow, and may be greater than or equal to 50 V when the speed of rotation of the rotating member is fast. Converter 53 can boost the voltage to a certain extent, but if the effective value of the AC voltage is excessively small, the voltage from converter 53 may not reach the first voltage range. Thus, in addition to converter 53, a voltage doubler rectifier circuit boosts the AC voltage. Thus, even if the effective value of the AC voltage from generator G is excessively small, for example, it is possible to cause the voltage from converter 53 to reach the first voltage range.

**In** a conceivable configuration (the configuration of a first comparative example), power supply device 17 does not include limiting circuit 52 and includes converter 53. In this configuration of the first comparative example, it is necessary to assume a case where the effective value of the AC voltage from generator G becomes excessively large. In this assumption, in the configuration of the first comparative example, it is necessary to set the upper limit of the second voltage range of converter 53 to a value greater than or equal to the maximum value of the effective value of the AC voltage from generator G. In the configuration of the first comparative example, thus, the cost of converter 53 increases. Thus, as power supply device 17 includes limiting circuit 52, it is possible to use a less expensive converter 53 than in the configuration of the first comparative example.

In another conceivable configuration (the configuration of a second comparative example), power supply device 17 includes limiting circuit 52 and does not include converter 53. In the configuration of the second comparative example, if the input voltage of limiting circuit 52 is excessively large, it is necessary to consume the voltage for the input-output potential difference by only limiting circuit 52 in order to cause the output voltage of limiting circuit 52 to be less than or equal to the upper limit of the first voltage range of electronic circuit 54. For example, if the input voltage of limiting circuit 52 is 50 V and the upper limit of the first voltage range is 5 V, it is necessary to consume a voltage of 45 V that is the input-output potential difference. Thus, the configuration of the second comparative example needs to include a heat-dissipating member that dissipates the heat generated by the consumption of the voltage of the input-output potential difference, increasing cost.

In general, the heat generated by the element (i.e., limiting circuit 52) that requires a heat dissipation member is proportional to power consumption. In addition, the input current of limiting circuit 52 and the output current of limiting circuit 52 are approximately equal to each other. Thus, the power consumption is the value obtained by multiplying the above input-output potential difference by the input current. Thus, if the voltage input to limiting circuit 52 increases, the power consumption in limiting circuit 52 also increases.

In addition, the power consumption of converter 53 depends on the efficiency of converter 53. Herein, the efficiency of converter 53 is assumed to be 100%. In this case, converter 53 does not consume any power. In this case, thus, input current × input voltage = output current × output voltage, in converter 53. Assuming that output current × output voltage is a constant value, then if the voltage input to converter 53 increases, the current input to converter 53 decreases.

Herein, the case where the output voltage of limiting circuit 52 is large will be described. In this case, for example, the output voltage of limiting circuit 52 is near the upper limit (withstand voltage) of the second voltage range of converter 53 and is less than this upper limit. In this case, it is assumed that the electric power (the product of the input current of converter 53 and the input voltage of converter 53) input to converter 53 is constant. When the output voltage of limiting circuit 52 is large, that is, when the input voltage of converter 53 is large, the input current of converter 53 becomes small. A small input current of converter 53 means a small output current of limiting circuit 52. As described above, the input current of limiting circuit 52 is almost equal to the output current of limiting circuit 52. Thus, the input current of limiting circuit 52 becomes smaller. If the input-output potential difference of limiting circuit 52 becomes smaller, the power consumption becomes smaller according to the square value of the current. Thus, the power consumption of limiting circuit 52 can be greatly reduced. In this way, by setting the output voltage of limiting circuit 52 to the upper limit (near the upper limit) of the second voltage range of converter 53, the power consumption of limiting circuit 52 can be reduced.

Next, the processing of power supply device 17 will be described using specific numerical values. In the present embodiment, the AC voltage (amplitude) generated by generator G is assumed to be 2 V to 30 V. In this case, if a loss in the members (for example, two diodes described later) included in voltage doubler rectifier circuit 51 is assumed to be 0.5 V × 2, the output voltage of voltage doubler rectifier circuit 51 will be 3 V to 59 V. In addition, a voltage loss of limiting circuit 52 is assumed to be 1 V, and a limiting voltage set in limiting circuit 52 is assumed to be 20 V. In this case, the output of limiting circuit 52 will be 2 to 19 V. Thud, converter 53 with a withstand voltage of 20 V can be used. As described above, converter 53 has an output voltage of 3.3 V to 5 V and has a small size enough to be incorporated into bearing device 1. Generally, the withstand voltage of converter 53 as described above is 15 V to 20 V. The output voltage of limiting circuit 52 is 15 V to 20 V.

As described above, power supply device 17 includes first circuit 61 and converter 53. First circuit 61 converts an AC voltage from generator G into a first DC voltage and outputs the first DC voltage to converter 53. Converter 53 then outputs a second DC voltage adjusted to a voltage in the first voltage range to electronic circuit 54. Thus, power supply device 17 can supply electronic circuit 54 with the DC voltage (second DC voltage) adjusted to a voltage in the first voltage range specified in electronic circuit 54. Thus, power supply device 17 can supply electronic circuit 54 with the DC voltage in the voltage range specified in electronic circuit 54. In addition, first circuit 61 supplies the first DC voltage adjusted to a voltage in the voltage range (second voltage range) specified in converter 53. Therefore, first circuit 61 can supply converter 53 with the DC voltage in the voltage range specified by converter 53.

In addition, first circuit 61 includes limiting circuit 52. Limiting circuit 52 adjusts (steps down) the DC voltage input to limiting circuit 52 to a first DC voltage in the second voltage range. Limiting circuit 52 then outputs the first DC voltage to converter 53. Therefore, even if the AC voltage generated by generator G is excessively large, an appropriate voltage can be supplied to converter 53.

In addition, first circuit 61 includes voltage doubler rectifier circuit 51 arranged in the stage prior to limiting circuit 52. Voltage doubler rectifier circuit 51 converts the AC voltage generated by generator G into a boosted DC voltage and outputs the DC voltage. Thus, even if the AC voltage generated by generator G is excessively small, an appropriate voltage can be supplied to converter 53. In other words, as power supply device 17 includes voltage doubler rectifier circuit 51, limiting circuit 52, and converter 53, a stable voltage can be supplied to electronic circuit 54, regardless of whether the rotating member is rotating at high speed or low speed. Further, power supply device 17 can have a simple and smaller circuit configuration, and also, power supply device 17 can generate a smaller amount of heat, thus allowing circuit board 13 to be mounted in a small space, such as inside bearing device 1.

In addition, the second voltage range (output of limiting circuit 52) of converter 53 is set to be greater than or equal to 15 V and less than or equal to 20 V. Thus, the degree of freedom for the designer to choose converter 53 can be improved, and the amount of heat generated by limiting circuit 52 can be reduced.

In addition, sensors (in the present embodiment, acceleration sensor 15 and temperature sensor 16) that monitor the state of bearing 2 and wireless communication circuit 18 that wirelessly transmits the detected values of the sensors to an external device are mounted on electronic circuit 54. Thus, power supply device 17 can convert the AC power generated by generator G into DC power in an appropriate voltage range and supply the DC power to acceleration sensor 15, temperature sensor 16, and wireless communication circuit 18.

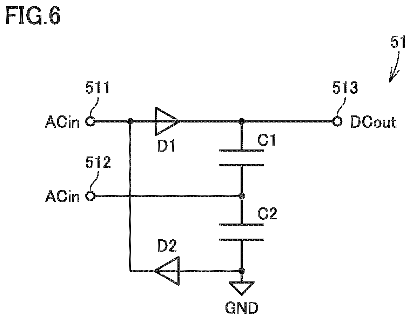

Fig. 6 is a circuit diagram showing an example of voltage doubler rectifier circuit 51. Voltage doubler rectifier circuit 51 includes a diode D1, a diode D2, a capacitor C1, and a capacitor C2 connected in series with capacitor C1.

A first input terminal 511 of voltage doubler rectifier circuit 51 is connected to the anode of diode D1. The cathode of diode D1 and capacitor C1 are connected to an output terminal 513 of voltage doubler rectifier circuit 51. The anode of diode D2 is connected to capacitor C2. The cathode of diode D2 is connected to first input terminal 511. The connection node between capacitor C1 and capacitor C2 is connected to a second input terminal 512 of voltage doubler rectifier circuit 51.

When the AC voltage is positive, diode D1 is turned on and diode D2 is turned off, and capacitor C1 is charged. When the AC voltage is negative, diode D1 is turned off and diode D2 is turned on, and capacitor C2 is charged. In this way, as capacitor C1 and capacitor C2 are alternately charged, electric charges are stored in capacitor C1 and capacitor C2. Since capacitor C1 and capacitor C2 are connected in series, voltage doubler rectifier circuit 51 can output a DC voltage that is twice the peak-to-peak value of the AC voltage.

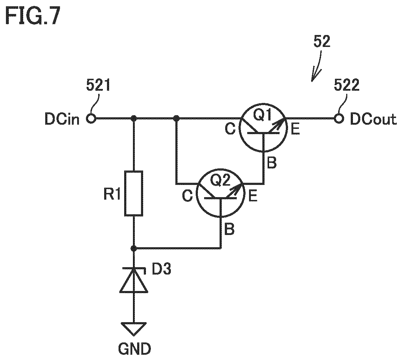

Fig. 7 is a circuit diagram showing an example of limiting circuit 52. Limiting circuit 52 includes a resistor R1, a Zener diode D3, a transistor Q1, and a transistor Q2. An input terminal 521 of limiting circuit 52 is connected to one end of resistor R1, the collector of transistor Q1, and the collector of the transistor Q2. The anode of Zener diode D3 is grounded, and the cathode of Zener diode D3 is connected to the other end of resistor R1 and the base of transistor Q2. The emitter of transistor Q2 is connected to the base of transistor Q1. The emitter of transistor Q1 is connected to an output terminal 522 of limiting circuit 52.

When the voltage input to limiting circuit 52 is less than or equal to the Zener voltage of Zener diode D3, the voltage from the connection node between resistor R1 and Zener diode D3 is applied to the base of transistor Q2. Further, the voltage is supplied from the emitter of transistor Q2 to the base of transistor Q1. This causes the input DC voltage to be output.

When the voltage input to limiting circuit 52 becomes greater than the Zener voltage, the voltage applied to the base of transistor Q2 is limited because the anode of Zener diode D3 is grounded. Thus, the voltage applied to the base of transistor Q1 is also limited. This limits the voltage output from limiting circuit 52. Fig. 7 shows an example in which a Darlington transistor is formed of transistor Q1 and transistor Q2. Alternatively, limiting circuit 52 may be formed of a circuit with one transistor that is not the Darlington transistor, or a field effect transistor (FET). Limiting circuit 52 may also be a dedicated voltage limiting integrated circuit (IC), or may be a low dropout (LDO) linear regulator.

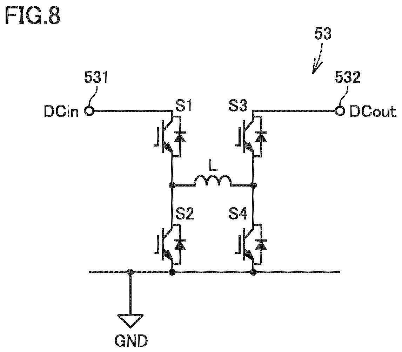

Fig. 8 is a circuit diagram showing an example of converter 53. The example of Fig. 8 shows a configuration in which converter 53 is a step-up/step-down chopper. The example of Fig. 8 includes a switch element S1, a switch element S2, a switch element S3, a switch element S4, and a reactor L. In addition, although not shown, converter 53 includes a sensor that detects the input voltage of converter 53, a sensor that detects the output voltage of converter 53, and a control circuit. The control circuit switches ON and OFF of switch elements S1 to S4 based on the input voltage and output voltage.

In the example of Fig. 8, one end of switch element S1 is connected to an input terminal 531 of converter 53. The other end of switch element S1 is connected to one end of switch element S2. The other end of switch element S2 is grounded.

One end of switch element S3 is connected to an output terminal 532 of converter 53. The other end of switch element S3 is connected to one end of switch element S4. The other end of switch element S4 is grounded.

For example, when an input voltage is greater than an output voltage, the control circuit switches to the step-down mode to reduce the input voltage, turning on switch element S3 and turning off switch element S4. At the same time, the control circuit repeatedly switches between a first state and a second state described below. In the first state, switch element S1 is ON, and switch element S2 is OFF. In the second state, switch element S1 is OFF, and switch element S2 is ON.

When an input voltage is smaller than an output voltage, the control circuit switches to the step-up mode to boost the input voltage, turning on switch element S1 and turning off switch element S2. At the same time, the control circuit repeatedly switches between a third state and a fourth state described below. In the third state, switch element S3 is ON, and switch element S4 is OFF. In the fourth state, switch element S3 is OFF, and switch element S4 is ON. As a result, converter 53 can adjust the input voltage of converter 53 to a DC voltage in the first voltage range and supply the DC voltage to electronic circuit 54.

### <Embodiment 2>

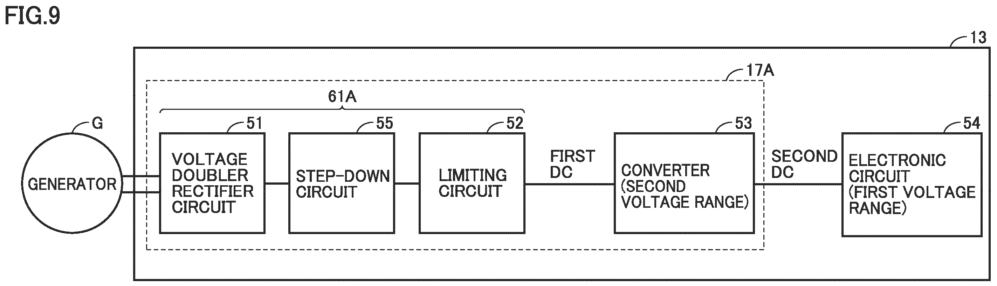

Fig. 9 shows an example configuration of a power supply device 17A of Embodiment 2. In Fig. 9, power supply device 17A includes a first circuit 61A instead of first circuit 61. First circuit 61A includes a step-down circuit 55. In Fig. 9, step-down circuit 55 is arranged between voltage doubler rectifier circuit 51 and limiting circuit 52. Step-down circuit 55 steps down the voltage more as the DC voltage output from voltage doubler rectifier circuit 51 is larger. The DC voltage stepped down by step-down circuit 55 is output to limiting circuit 52.

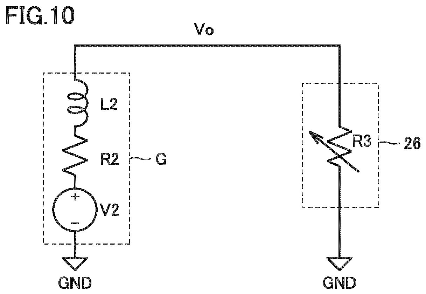

Next, the reason for arranging limiting circuit 52 will be described. Fig. 10 shows an equivalent circuit of generator G and a load 26. Load 26 corresponds to circuit board 13, for example. V2 in Fig. 10 indicates a no-load electromotive force of generator G, and a voltage proportional to the speed of rotation of the rotating member (inner ring 4) is generated. R2 indicates a resistance of a winding, and L1 indicates an inductance of the winding. Vo indicates a generated voltage when load 26 is connected.

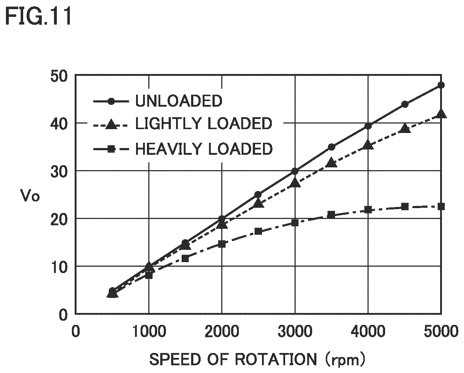

Fig. 11 shows the relationship between a speed of rotation of a rotating member and a generated voltage Vo. The horizontal axis indicates the speed of rotation of the rotating member, and the vertical axis indicates generated voltage Vo. In the example of Fig. 11, the solid line indicates the case where load 26 is no load, the broken line indicates the case where load 26 is light load, and the dash-dot line indicates the case where load 26 is heavy load.

In the example of Fig. 11, when load 26 is no load, generated voltage Vo becomes no-load electromotive force V2, and as indicated by the solid line, it becomes a voltage that is almost proportional to the speed of rotation. Next, the case where load 26 is heavy load will be described. In this case, the impedance of R3 is small (heavy as a load) compared to a combined impedance of L2 and R2. In this case, as indicated by the dash-dot line in Fig. 11, generated voltage Vo does not increase even if the speed of rotation increases. Next, the case where load 26 is light load will be described. In this case, the impedance of R3 is large (light as a load) compared to a combined impedance of L2 and R2 . In this case, as indicated by the broken line in Fig. 11, generated voltage Vo also increases as the speed of rotation increases.

In the example in Fig. 11, when the speed of rotation is 5000 rpm, generated voltage Vo is approximately twice larger when load 26 is light load than when load 26 is heavy load. In designing of generator G, if the designer tries to achieve a high power generation voltage at a slow speed of rotation, an excessively large voltage may be generated at a fast speed of rotation, and a voltage higher than or equal to the withstand voltage of circuit board 13 may be supplied to circuit board 13. More particularly, even when the speed of rotation of the rotating member is the maximum speed of rotation, preferably, a smaller voltage is input to limiting circuit 52.

Thus, as shown in Fig. 9, the inventor has arranged step-down circuit 55 between voltage doubler rectifier circuit 51 and limiting circuit 52. Step-down circuit 55 suppresses a voltage drop when the speed of rotation of the rotating member is slow, and increases a voltage drop when the speed of rotation of the rotating member is fast.

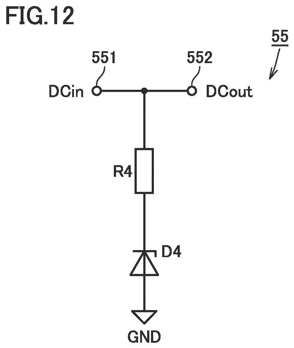

Fig. 12 is a circuit diagram showing an example of step-down circuit 55. In the example of Fig. 12, step-down circuit 55 includes a resistor R4 and a Zener diode D4. An input terminal 551 and an output terminal 552 of step-down circuit 55 are connected to one end of resistor R4. In addition, the other end of resistor R4 is connected to the cathode of Zener diode D4. In addition, the anode of Zener diode D4 is grounded.

In the example of Fig. 12, if the voltage input to step-down circuit 55 becomes large to exceed the Zener voltage of Zener diode D4, a large current flows through resistor R4, and electric power is consumed by resistor R4 and Zener diode D4.

As described above, power supply device 17A includes step-down circuit 55. Consequently, power supply device 17A suppresses a voltage drop when the DC voltage output from the voltage doubler rectifier circuit is small (when the speed of rotation of the rotating member is slow). In addition, power supply device 17A increases a voltage drop when the DC voltage output from the voltage doubler rectifier circuit is large (when the speed of rotation of the rotating member is fast). Thus, components with a low withstand voltage can be used in circuit board 13. Also, in general, when components with a low withstand voltage are used, those components also have a smaller voltage drop. Thus, power supply device 17A can maintain voltage when the speed of rotation of the rotating member is slow, thus enabling driving of electronic circuit 54 when the speed of rotation is much slower.

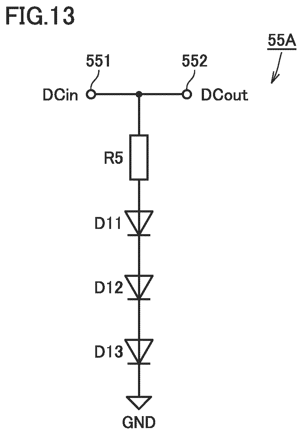

Fig. 13 is a circuit diagram showing an example of another step-down circuit 55A. Step-down circuit 55A includes a resistor R5 and a plurality of diodes (in the example of Fig. 13, three diodes D11, D12, D13) connected in series with each other.

Input terminal 551 and output terminal 552 of step-down circuit 55A are connected to one end of resistor R5. The other end of resistor R5 is connected to the anode of diode D11. The cathode of diode D13 is grounded.

In step-down circuit 55A, the total value of forward voltages of diodes D11, D12, D13 is used. For example, when the forward voltages of diodes D11, D12, D13 are 0.6 V, the total value is 1.8 V.

In the example of Fig. 13, only when a voltage input to step-down circuit 55A becomes large and the input voltage exceeds the total value, a large current flows through diodes D11, D12, D13 due to the static characteristics of the diodes. In this case, thus, step-down circuit 55A can cause resistor R5 and diodes D11, D12, D13 to consume electric power.

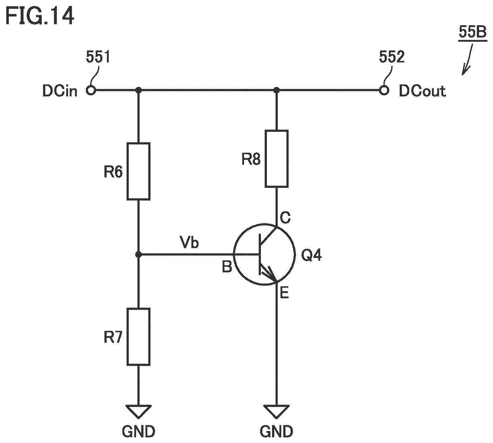

Fig. 14 is a circuit diagram showing an example of another step-down circuit 55B. Step-down circuit 55B includes resistors R6, R7, R8 and a transistor Q4. One end of resistor R6 and one end of resistor R8 are connected to input terminal 551 and output terminal 552 of step-down circuit 55A. The other end of resistor R6 is connected to one end of resistor R7. The other end of resistor R7 is grounded.

The connection node between resistor R6 and resistor R7 is connected to the base of transistor Q4, the emitter of transistor Q4 is grounded, and the collector of transistor Q4 is connected to the other end of resistor R8.

When the voltage input to step-down circuit 55B becomes large, a voltage Vb is applied to the base of transistor Q4. This causes transistor Q4 to turn on, and accordingly, electric power is consumed by resistor R4 and transistor Q4. Voltage Vb applied to the base of transistor Q4 depends on the ratio between resistors R6 and R7. For example, when Vb exceeds 0.6 V, transistor Q4 will turn on.

### <Modifications>

(1) First circuit 61 may be any other circuit as long as it is a "circuit that converts the AC voltage into the first DC voltage adjusted to a voltage in the second voltage range". For example, first circuit 61 may be configured to include only limiting circuit 52 without voltage doubler rectifier circuit 51. First circuit 61 may also be configured to include only voltage doubler rectifier circuit 51 without limiting circuit 52.

The above example has described the case where converter 53 is a step-up/step-down converter, but converter 53 may also be a step-up converter or a step-down converter.

(2) The above embodiments have described the configuration in which power supply device 17 is mounted in bearing device 1. However, power supply device 17 may also be mounted in any other device including generator G. Even in such a configuration, if the effective value of the AC voltage generated by generator G fluctuates, power supply device 17 can supply a voltage in a specified voltage range to the electronic circuit.

### [Additional Notes]

(Item 1) A power supply device of the present disclosure drives an electronic circuit. An input voltage of the electronic circuit is determined in a first voltage range. The power supply device includes a first circuit and a second circuit. The first circuit converts an AC voltage from a generator into a first DC voltage and outputs the first DC voltage. The second circuit outputs, to the electronic circuit, a second DC voltage obtained by adjusting the first DC voltage to a voltage in the first voltage range. An input voltage of the second circuit is determined in a second voltage range. The first circuit converts the AC voltage into the first DC voltage adjusted to a voltage in the second voltage range.

(Item 2) In the power supply device according to item 1, the first circuit includes a limiting circuit. The limiting circuit is configured to adjust a DC voltage input to the limiting circuit to the first DC voltage in the second voltage range.

(Item 3) In the power supply device according to item 2, the first circuit includes a voltage doubler rectifier circuit that converts the AC voltage into a DC voltage boosted, and outputs the DC voltage.

(Item 4) In the power supply device according to item 3, the first circuit includes a step-down circuit that steps down the DC voltage output from the voltage doubler rectifier circuit and outputs the DC voltage to the limiting circuit. The step-down circuit is configured to step down the DC voltage output from the voltage doubler rectifier circuit more as the DC voltage is larger.

(Item 5) In the power supply device according to any one of items 1 to 4, the second voltage range is greater than or equal to 15 V and less than or equal to 20 V.

(Item 6) A bearing device of the present disclosure includes the power supply device according to any one of items 1 to 4, a rotating member, and the generator that outputs an AC voltage according to rotation of the rotating member.

(Item 7) The bearing device according to item 6 includes a bearing, a sensor that monitors a state of the bearing, and a communication circuit that wirelessly transmits a detection value of the sensor to an external device. The electronic circuit includes the sensor and the communication circuit.

It should be understood that the embodiments disclosed herein are illustrative and non-restrictive in every respect. The scope of the present disclosure is defined by the scope of the claims, rather than the description on the embodiments above, and is intended to include any modifications within the meaning and scope equivalent to the scope of the claims.

### REFERENCE SIGNS LIST

1 bearing device; 2 bearing; 3 outer ring; 4 inner ring; 5 stator; 6 sensor unit; 7 magnetic ring; 7a core; 7b multipole magnet; 7c flange portion; 8 rolling element; 9 cage; 10 seal; 12 cage member; 13 circuit board; 14 lid; 15 acceleration sensor; 16 temperature sensor; 17, 17A power supply device; 18 wireless communication circuit; 18a antenna portion; 19 screw; 26 load; 51 voltage doubler rectifier circuit; 52 limiting circuit; 53 converter; 54 electronic circuit; 55, 55A, 55B step-down circuit; 61, 61A first circuit.

## Claims

1. A power supply device that drives an electronic circuit,
an input voltage of the electronic circuit being determined in a first voltage range,
the power supply device comprising:
a first circuit that converts an alternating-current (AC) voltage from a generator into a first direct-current (DC) voltage and outputs the first DC voltage; and
a second circuit that outputs, to the electronic circuit, a second DC voltage obtained by adjusting the first DC voltage to a voltage in the first voltage range, wherein
an input voltage of the second circuit is determined in a second voltage range, and
the first circuit converts the AC voltage into the first DC voltage adjusted to a voltage in the second voltage range.

2. The power supply device according to claim 1, wherein
the first circuit includes a limiting circuit, and
the limiting circuit is configured to adjust a DC voltage input to the limiting circuit to the first DC voltage in the second voltage range.

3. The power supply device according to claim 2, wherein the first circuit includes a voltage doubler rectifier circuit that converts the AC voltage into a DC voltage boosted, and outputs the DC voltage.

4. The power supply device according to claim 3, wherein
the first circuit includes a step-down circuit that steps down the DC voltage output from the voltage doubler rectifier circuit and outputs the DC voltage to the limiting circuit, and
the step-down circuit is configured to step down the DC voltage output from the voltage doubler rectifier circuit more as the DC voltage is larger.

5. The power supply device according to any one of claims 1 to 4, wherein the second voltage range is greater than or equal to 15 V and less than or equal to 20 V.

6. A bearing device comprising:
the power supply device according to any one of claims 1 to 4;
a rotating member; and
the generator that generates an AC voltage according to rotation of the rotating member.

7. The bearing device according to claim 6, comprising:
a bearing;
a sensor that monitors a state of the bearing; and
a communication circuit that wirelessly transmits a detection value of the sensor to an external device,
wherein the electronic circuit includes the sensor and the communication circuit.
